(19) Europäisches Patentamt
European Patent Office
Office européen des brevets

(11) EP 3 829 138 A1

(12) EUROPEAN PATENT APPLICATION

(43) Date of publication:
02.06.2021 Bulletin 2021/22

(51) Int Cl.:
H04L 29/08 (2006.01)

(21) Application number: 19212154.9

(22) Date of filing: 28.11.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(71) Applicant: Bayer AG
51373 Leverkusen (DE)

(72) Inventor: Timmermann, Ralf Antonius
51375 Leverkusen (DE)

(74) Representative: BIP Patents
c/o Bayer Intellectual Property GmbH
Alfred-Nobel-Straße 10
40789 Monheim am Rhein (DE)

(54) **A DATA PROCESSING METHOD AND SYSTEM**

(57) The invention relates to a method (10) of data processing comprising: Obtaining (20) sensor signal data from at least one sensor unit; Generating (30) compressed sensing data from the sensor signal data according to a predefined random matrix; Packetizing (40) the compressed sensing data to a plurality of payloads; Sending (50) the plurality of payloads to a processing unit over a wireless communication system; Receiving (60) the plurality of payloads by the processing unit; Restoring (70) the sensor signal data by the processing unit by way of compressed sensing of the received plurality of payloads and the use of a predefined random matrix.

EP 3 829 138 A1

Printed by Jouve, 75001 PARIS (FR)

**Description**

FIELD OF THE INVENTION

The present invention relates to a data processing method and a system for data processing.

BACKGROUND OF THE INVENTION

Compressed Sensing (CS) is a data processing method for efficiently acquiring and reconstructing a signal. It permits data sampling much below the Nyquist-Shannon sampling rate, relying on the sparsity of signals. As a matter of fact, CS is capable to reconstruct the original signal from much fewer data points than those originally acquired. The signal can be available in its original domain, such as in time or spatial domains, or being transformed to any other domain, such as to the frequency domain. It applies to data that is either sparse or compressible. In the first case only a fraction of randomly selected data points is considered. In the latter case compressible data, when sorted, decrease in strength obeying a power law after being transformed to another domain. CS is widely applied in many fields such as magnetic resonance imaging (MRI), high-speed video application and wideband applications. These applications greatly benefit from reduced sampling time and reduced resources and bandwidths.

In Internet of Things (IoT), a system of computing devices with each thing being uniquely identified, all components are interrelated over a network. Such IoT components have the ability to transfer data between each other without requiring any kind of human interaction. Machine-to-machine (M2M) communication refers to connecting a device to the cloud, managing it and collecting data. In some instances, IoT devices are linked to the network through wireless connections, e.g. WLAN, Bluetooth, mobile radio, and Low Power Wide Area Network (LPWAN) to name the principal. LPWAN does not represent a solitary technology, but represents a class of technologies, namely Sigfox, LoRa(WAN), MIOTY, and NB IoT (LTE-M), to name the major representatives. LPWAN has merits and disbenefits. Owing to the low energy consumption and their long-range coverage (radio transmission between sending unit, i.e. as part of a sensor unit, and reception unit) they are superior to other technologies and thus can be deployed in remote places (up to the order of km from the reception unit) where there is no electrical power available. Typically, components of such as system are battery-driven with batteries having lifetime of up to ten years. There are several scenarios where LPWAN plays to its strengths, such as in logistics, smart city, smart agriculture, and predictive maintenance to name just a view. LPWAN devices are relatively cheap compared to other technologies. LPWANs may use licensed or unlicensed frequencies and may use both proprietary and open standards. However, LPWANs have in common the relative low bandwidths of data to be transferred. Furthermore, the data volume comprised in a single radio transmission is limited. An additional aggravating factor of some of the above technologies is that the Time-on-Air is limited in order to allow transmissions of other competing devices. The time between two consecutive radio transmissions from a device is a multiple factor of the Time-on-Air itself, thus limiting the effective bandwidths even more.

There are situations where audio, sound, vibration data (in one dimension) and imaging data (in two or more dimensions) on the whole need to be transferred from a narrow-band sensing unit to a processing and monitoring device. These situations occur when e.g. the status of electrical, mechanical, biological systems need to be monitored. An example of a use case of interest is a predictive maintenance application of ventilation systems consisting of rolling bearings where signals need to be transferred from remote location, with no electrical power available. As indicated before, when the information is to be sent via LPWAN, these technologies face certain common limits. A first issue is the small bandwidth between the sensor units and their corresponding receiving unit (radio gateway/concentrator). As a result thereof, the physical payload that comprises the data is small, i.e. on the order of bytes. In addition, also the Time-on-Air e.g. with LoRa(WAN) system is limited. Hence, data needs to be compressed if data volume exceeds the physical payload. Furthermore, the small hardware capacity of the sensor unit devices is an issue, as their CPU and RAM have limited capacities and may prevent extended computing for alternative compression purposes. Moreover, sensor units are often located in remote places, this arrangement requires that sensor units need to be battery-powered and that the batteries have long lifetimes on the order of years.

The measurement of vibration, audio, sound and/or imaginary data with sensor unit devices and the sensor signal data transmission over a wireless communication system requires large data volumes to be measured, processed and transferred. By applying CS the small bandwidth issue with LPWAN can - to a certain extend - be mitigated, as only a sparse set of measured signals need to be transferred. The sparsity of data goes along with a hardware capacity (CPU and RAM) reduction on the sensor unit side in comparison to the transfer of the sensor signal data transmission of all sensed data. Only a sparse set of data needs to be temporarily stored aboard the sensor unit before being sent. Secondly, the need of computing power for compressing the signal aboard the sensor unit is obviated, because the entire decompression/restoration of data is dislocated to the unit where the data is received, where there is generally enough computing power available.

However, considering the above there is still a need to further improve data processing such as e.g. data volume reduction in wireless transmissions between LPWAN devices particularly for sensor signal data transmission of sensed data having large data volume.

## SUMMARY OF THE INVENTION

The object of the present invention is solved with the subject matter of the independent claims, wherein further embodiments are incorporated in the dependent claims.

In an aspect, there is provided a method of data processing comprising:

- Obtaining sensor signal data from at least one sensor unit,
- Generating compressed sensing data from the sensor signal data according to a predefined random matrix,
- Packetizing the compressed sensing data to a plurality of payloads,
- Sending the plurality of payloads to a processing unit over a wireless communication system,
- Receiving the plurality of payloads by the processing unit,
- Restoring the sensor signal data by the processing unit by way of compressed sensing of the received plurality of payloads and the use of a predefined random matrix.

In other words, the data volume of sensor signal data from a sensor unit determined to be transmitted to a processing unit is reduced via compressed sensing. Compressed sensing (CS) is based on the principle that, through optimization, the sparsity of a signal can be exploited to recover it from far fewer samples than required by the Nyquist-Shannon sampling theorem. There are two conditions under which recovery is possible. The first one is sparsity, which requires the signal to be sparse in some domain. The second one is incoherence, which is applied through the isometric property, which is sufficient for sparse signals. In comparison to known compressed sensing methods, the data volume reduction is further increased by a factor of 2 with the herein described method owing to the fact that only the measured values need to be transferred as the random matrix is already available on the sensor unit side and on the processing unit side. Further advantages of the method as described are a reduction of the data volume temporarily stored in the processing unit as well as the avoidance of usage in computing resources on the at least one sensor unit.

In this manner, the data processing method is particularly useful in combination with LPWAN technologies and IoT architectures.

In an example, the sensor signal data are periodical sensor signal data.

Thus, the signal data to be transferred is of periodic nature, i.e. is of a compressible representation, as is the case with vibration, sound and/or imaging data. The signal can be arranged in one or more dimensions. Even though such signal data may comprise large data volumes the method of data processing described herein enables transmittance of such data via LPWAN.

In an example, the sensor signal data are periodical physical, chemical and/or biological sensor signal data.

Thus, sensor signal data can be readings of e.g. temperature, humidity, analysis of chemical compositions, air pressure, air flow, liquid flow, etc.

In an example, the sensor signal data are selected form the group of audio, vibration, sound and/or image signal data etc.

In other words, the method of data processing is applicable to all kinds of applications such as e.g. in logistics, smart city, smart agriculture and/or predictive maintenance.

In an example, the following steps are performed by the at least one sensor unit:

- Obtaining a sensor signal data,
- Generating compressed sensing data from the sensor signal data according to a predefined random matrix, and
- Packetizing the compressed sensing data to a plurality of payloads,
- Sending the plurality of payloads to a processing unit over a wireless communication system.

In other words, the at least one sensor unit comprises electrical components allowing to convert analogous data to digital data, to apply CS, to pre-process the data and to transmit the compressed data via wireless communication system such as a LPWAN.

In an example, the predefined random matrix comprises random setpoint values defined and implemented on the at least one sensor unit and the processing unit prior to the step of obtaining sensor signal data from at least one sensor.

In this manner, the information about the predefined random matrix is already available on the at least one sensor unit and the processing unit prior to their operational use. Therefore, it is not necessary to transmit information about the random matrix during use of the at least one sensor unit and the processing unit which reduces the transmitted data volume by a factor of 2.

In an example, a payload comprises compressed sensing data preceded by a corresponding checksum

In other words, in wireless transmission technologies such as LPWAN, the data volume acquired usually exceeds what can be transmitted within e.g. one sole radio transmission. Hence, a sparse dataset of the acquired sensor data needs to be prepared such that subsequent chunks fit into individual payloads. The physical payloads are to be sent consecutively, depending on the maximum lengths of the payloads, and the nature of the wireless technology utilized. Each payload is preceded by a checksum in order to both identify each package/payload and/or its length. Thus, this method guarantees that all data is received by the processing unit and being considered for recompositing of the payloads to a final sparse dataset thereafter.

In an example, the plurality of payloads is sent in random checksum sequence.

In other words, the data is preferably sent in unsorted form. This has the advantage that when some of the data is lost during wireless transmission (if the data is not re-sent) it is more likely that the original data can be restored due to the retained randomness in the sparse data. Therefore, sending the data in random checksum sequence contributes to data integrity.

In an example, each setpoint value of the predefined random matrix and its corresponding sensor signal data are packetized into a payload in unsorted sequence.

In other words, when including the compressed sensing data (as specified by the predefined random matrix) in an unsorted sequence into a payload this measure as well contributes to data integrity in a similar way as discussed before for the sending of the data in random checksum sequence.

In an example, the wireless communication system is a Low Power Wide Area Network (LPWAN).

Thus, the method of data processing is particularly useful in connection with LPWANs due to the limitations of the LPWAN regarding small bandwidths, hardware and energy resources and Time-on-Air. The method of data processing expands the applications of LWAN technologies and IoT.

In an example, the wireless communication system is selected from the group of LoRa(WAN), Sigfox, NB-IoT, and MIOTY.

In other words, these wireless communication systems are the major representatives of LPWAN.

In an example, the wireless communication system is LoRa(WAN).

In an example, after the step of receiving the plurality of payloads by the processing unit, the plurality of payloads are assembled to a dataset (by the processing unit) before the sensor signal data is restored by the processing unit by way of compressed sensing of the received payloads and the use of the predefined random matrix.

In a second aspect, there is provided a system for data processing comprising

at least one sensor unit, a wireless communication system and a processing unit. At least one sensor is configured to obtain sensor signal data. The at least one sensor is configured to generate compressed sensing data from the sensor signal data according to a predefined random matrix. The at least one sensor unit is configured to packetize the compressed sensing data to a plurality of payloads. The at least one sensor unit is configured to send the plurality of payloads to a processing unit over a wireless communication system. The processing unit is configured to receive the plurality of payloads. The processing unit is configured to restore the sensor signal by way of compressed sensing of the received payloads and the use of a predefined random matrix.

In other words, the system of data processing implements the data processing method described herein and provides improved means for data processing and transmission of sensed data with large data volume over wireless communication systems, particularly over LPWAN systems.

In another aspect, there is provided a method and/or system according to one of the previous aspects used for predictive maintenance.

In other words, the method and system described herein are particularly useful for applications in the field of predictive maintenance. Predictive maintenance techniques are designed to help determine the condition of in-service equipment in order to estimate when maintenance should be performed. Therefore, instead of routine or time-based preventive maintenance the tasks are performed only when warranted. As a consequence, predictive maintenance applications result in cost savings.

The above aspects and examples will become apparent from and be elucidated with reference to the embodiments described hereinafter.

BRIEF DESCRIPTION OF THE DRAWINGS

Exemplary embodiments will be described in the following with reference to the following drawings:

Fig. 1 shows a schematic set up of the method of data processing; and
Fig. 2 shows an illustrative example of the method of data processing and the data structure.
Figure 3 shows a schematic diagram of a system for data processing.
Figure 4 shows a schematic diagram of a sensor unit.
Figure 5 shows an example of a vibration spectrum of a table air fan.

DETAILED DESCRIPTION OF EMBODIMENTS

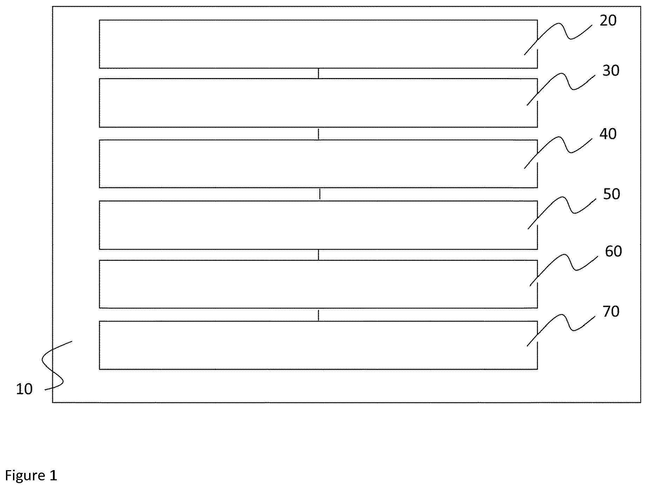

Figure 1 shows an example of a method 10 of data processing. The method of data processing comprises:

in an obtaining step 20, obtaining a sensor signal data from at least one sensor unit,
in a generating step 30, generating compressed sensing data from the sensor signal data according to a predefined random matrix,
in a packetizing step 40, packetizing the compressed sensing data to a plurality of payloads,
in a sending step 50, sending the plurality of payloads to a processing unit over a wireless communication system,
in a receiving step 60, receiving the plurality of payloads by the processing unit,
in a restoring step 70, restoring the sensor signal data by the processing unit by way of compressed sensing of the received plurality of payloads and the use of a predefined random matrix.

According to an example, the sensor signal data are periodical sensor signal data.

According to an example, the sensor signal data are periodical physical, chemical and/or biological sensor signal data.

In an example, the sensor signal data is selected from the group e.g. temperature, humidity, analysis of chemical compositions, air pressure, air flow, liquid flow, etc.

According to an example, the sensor signal data are selected form the group of audio, vibration, sound and/or image signal data.

According to an example, the following steps are performed by the at least one sensor unit:

the obtaining step 20; obtaining a sensor signal data, the generating step 30; generating compressed sensing data from the sensor signal data according to a predefined random matrix; and
the packetizing step 40; packetizing the compressed sensing data to a plurality of payloads.
the sending step 50; sending the plurality of payloads to a processing unit over a wireless communication system.

According to an example, the predefined random matrix comprises random setpoint values defined and implemented on the at least one sensor unit and the processing unit prior to the step of obtaining 20 sensor signal data from at least one sensor unit.

In an example, each setpoint value represents an integer value in ascending order wherein a setpoint value (e.g. X=1) is assigned to a sensed signal data at a certain time point (e.g. T=1) and wherein the setpoint value with the next integer (e.g. X=2) is assigned to a sensed signal data at the time point of the former setpoint value plus a predefined time interval (e.g. T=1 plus predefined time interval equals T=2).

In an example, the predefined time interval between each neighboring setpoint values is equal and represents the sampling interval or the inverse sampling frequency.

In an example, the predefined time interval between the measurement of two individual sensor signal data (for data in the temporal domain such as audio data) is between 1/10 sec. to 1/40'000 sec., preferably between 1/50 sec. to 1/10'000 sec. and more preferably between 1/80 to 1/3000 sec.

In an example, the sampling rate is therefore between 10 Hz up to 40 kHz preferably 50 Hz up to 10 kHz and more preferably 80 Hz up to 3 kHz.

In an example, about 1% to 50%, preferably 10% to 40% of the sensed sensor signal are selected according to their corresponding setpoint values as known from the predefined random matrix and are further processed with compressed sensing.

In an example, the signal-to-noise ratio of the restored data (after CS) depends strongly on the total number of the sensed sensor signal data, the number of setpoint values in the random matrix and the ratio of both. In other words, e.g. 200 of 1.000 (20%) datapoints may provide inferior quality than 1.000 of 10.000 (10%) datapoints.

In an example, the predefined random matrix is a sparse representation of randomly selected setpoint values. With the knowledge of the randomly selected setpoint values it is possible to identify the sensor signal data which is required for CS.

In an example, "n" is the total number of datapoints y[n] taken in a vibration/sound measurement (1-dimensional data), where the data is acquired at a constant sampling rate. Alternatively, "n" could be the number of pixels in an array/image, if data is represented in one of more dimensions (2-dimensional data). Let also y[m] be a subset of y[n], where m << n, and m is the number of datapoints to be considered for CS processing and be transferred via a wireless communication system. "m" is a randomly chosen subset of "n" and "m" is to be made available on either side of the wireless communication system. Data that is decomposed according the predefined random matrix needs to be recomposed again the same way on the processing unit side, as it was decomposed on the sensor unit side. The original signal can exclusively be recovered back from compressive measurements if the randomness and its sorting are equal on both sides.

In an example, packetizing the compressed sensing data to a plurality of payloads refers to the grouping of the data that is determined to be transmitted over the wireless communication network into packets. Packets are at least made of a header and a payload. Data in the header are used by wireless communication system to direct the packet to its destination where the payload is extracted and used by the processing unit.

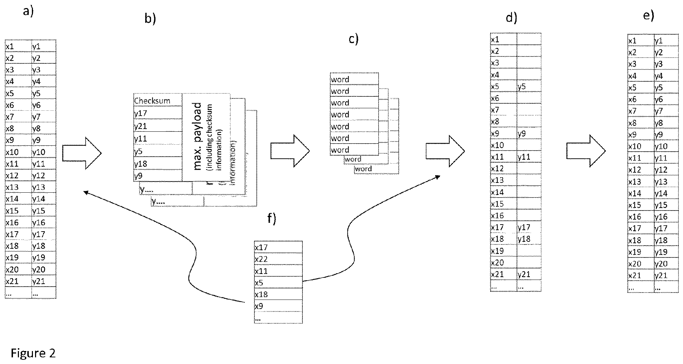

Figure 2 shows an illustrative example of the method 10 of data processing and the data structure. In a) the data structure is shown as sensed by the at least one sensor unit. In b) compressed sensing data is generated from the sensor signal data according to a predefined random matrix (as shown in f)) and then packetized to a plurality of payloads. The term "max. payload" in b) indicates that each payload has a maximal data size. Each payload further is preceded by the checksum information as described before. The predefined sparse random matrix (f) is to be made available on both side of the at least one sensor unit side and the processing unit side. The compressed sensing data is sent from the at least one sensor unit to the processing between (arrow between b) and c)) over a wireless communication system such as a LPWAN. In c) the plurality of payloads are received by the processing unit. The term "word" in c) denotes a wild-card for the data format (a sensed sensor signal data value is represented by bits or bytes or multiples thereof). In d) the plurality of payloads are assembled to a dataset by the processing unit. In e) the sensor signal data is restored by the processing unit by way of compressed sensing of the received plurality of payloads and the use of the predefined random matrix.

According to an example, a payload comprises compressed sensing data preceded by a corresponding checksum.

In an example, a checksum comprises one or more verification bytes.

In an example, checksum refers to a code that is created based on the data values in a payload to be transmitted using some algorithm and appended to the payload.

According to an example, the plurality of payloads are sent in random checksum sequence.

In an example, a payload lost during transmission over the wireless communication system is identified as such and disregarded by the processing unit when the sensor signal is restored by way of compressed sensing.

According to an example, each setpoint value of the predefined random matrix and its corresponding sensor signal data are packetized into a payload in unsorted sequence. In addition to sending the payloads in random checksum sequence, this measure further contributes to the randomness of the data to be sent over the wireless communication system. Therefore, if some of the payloads are lost during wireless transmission, it is more likely that the original data can be restored due to the randomness in the data. This further contributes to data integrity.

According to an example, the wireless communication system is a Low Power Wide Area Network. In such a network the payloads are transmitted via multiple radio transmissions.

According to an example, the wireless communication system is selected from the group of LoRa(WAN), Sigfox, NB-IoT, and MIOTY.

According to an example, the wireless communication system is LoRa(WAN).

According to an example, the plurality of payloads received by the processing unit in receiving step 60 are assembled to a dataset before restoring (in restoring step 70) the sensor signal data by the processing unit by way of compressed sensing of the received payloads and the use of a predefined random matrix.

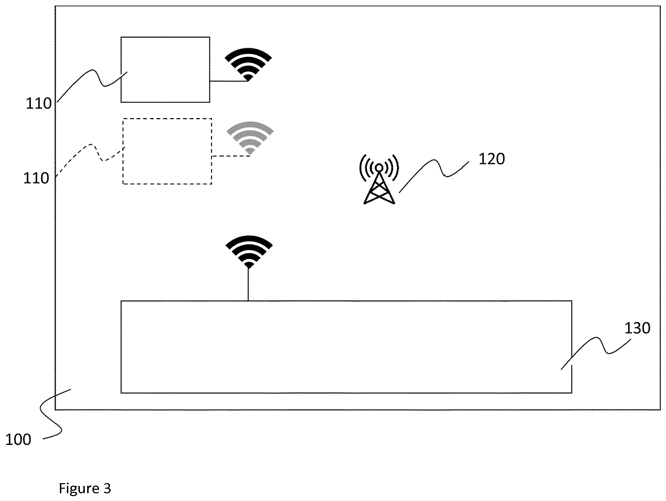

Figure 3 shows a schematic diagram of a system 100 for data processing. The system for data processing comprises at least one sensor unit 110, a wireless communication system 120, a processing unit 130. At least one sensor unit is configured to obtain sensor signal data and the at least one sensor unit is configured to generate compressed sensing data from the sensor signal data according to a predefined random matrix. The at least one sensor unit is further configured to packetize the compressed sensing data to a plurality of payloads. The at least one sensor unit is further configured to send the plurality of payloads to a processing unit over a wireless communication system. The processing unit is configured to receive the plurality of payloads. The processing unit is further configured to restore the sensor signal by way of compressed sensing of the received payloads and the use of a predefined random matrix.

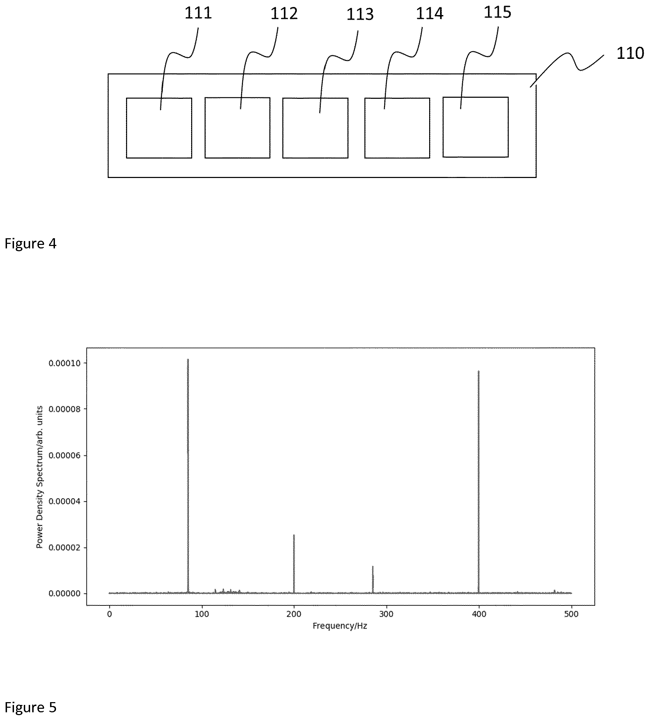

Figure 4 shows a schematic diagram of a sensor unit 110. The sensor unit may comprise a sensor 111 configured to detect or measure a physical property, an amplifier 112 configured to amplify the sensed information, an analog-to-digital signal converter (ADC) 113, a Pre-processing unit 114 configured to generate compressed sensing data from the sensor signal data according to a predefined random matrix and further configured to packetize the compressed sensing data to a plurality of payloads; and a sending unit 115 configured to send the plurality of payloads to a processing unit over a wireless communication system.

In an example, the at least one sensor 111 can include any one or more of an vibration sensor, gas analyzer, sound sensor such as a microphone, ultrasound sensor, accelerometer, camera, infrared camera, capacitance sensor or other electromagnetic wave sensor, stress or strain sensor, pressure sensor, weight sensor, magnetic field sensor, thermometer, liquid level sensor, liquid flow meter, air flow meter, voltmeter, ammeter, humidity sensor, engine knock sensor, liquid turbidity sensor, other position or displacement sensors, yaw, pitch and roll angular sensors, clock, odometer, pollution sensor, fuel gauge, GPS etc.

In an example, a vibration sensor is utilized in predictive maintenance applications. Such a vibration sensor can be utilized at remote places with no energy supply available, lacking connectivity (wiring) and awkward accessibility, such as high-availability gear driven air-handling systems or wind generators, etc. Vibration scans along the three perpendicular axes can be usually recorded - one after each other - for a time period of e.g. about 10 seconds to 5 minutes and for a maximum of a few times (such as e.g. 5 to 10 times) a day. The sampling frequencies can range from a few hundreds up to 10.000 Hz, depending on the oscillating systems, their resonant frequencies and modal numbers to be acquired.

In an example the Pre-processing unit 114 further comprises a storage which may be at least one buffer that stores the compressed sensing data temporarily while the preprocessing steps are performed.

In an example, the predefined random matrix can be downloaded from a processing unit to the at least one sensor unit prior to the use of the method of data processing and/or the system of data processing.

In an example, the wireless communication system is a Low Power Wide Area Network, preferably selected from the group of LoRa(WAN), Sigfox, NB-IoT, and MIOTY.

In an example, the wireless communication system is LoRa(WAN).

In an example, the "processing unit" refers to refers to any suitable physical or virtual processor (e.g. as part of "cloud computing") that can execute various processing based on program code instructions. The processing unit may include one or more cores. In the case where a plurality of cores are included, the plurality of cores may operate in parallel so as to improve the processing efficiency of the processing unit.

In an example, the processing unit does comprise a signal receiving unit configured to receive the plurality of payloads sent by the at least one sensor unit over the wireless communication system.

In an example, the original sensor signal data can be recovered from compressive measures according to the underdetermined system of linear equations $y= \varphi x$;

where $x \in \mathbb{R}^n, \ \varphi \in \mathbb{R}^{m \times n}, \ y \in \mathbb{R}^m$ and $m << n$. It has infinite number of possible solutions, y, φ, and x are the input matrix of length m, the m x n random measurement matrix, and the measurement vector of length n, respectively. The data sample matrix y is in the temporal domain. φ performs both a sampling and a transformation from spectral to temporal domains. The solution x is again in the frequency domain and may be converted, if applicable, to a temporal domain for the signal reconstruction. In above case, the unique solution can be obtained by posing the reconstruction problem as an lo-optimization problem. The lo-optimization problem seeks a solution having minimum lo-norm subject to the given constraints. There are multiple numbers of open source CS solvers available for download in the internet. However, most of these modules have in common that due to memory limitations imposed by large φ matrix, computing power with large RAM capacities needs to be made available. As an alternative method to solve the predefined random matrix one might want to utilize a Limited-memory Broyden-Fletcher-Goldfarb-Shanno (L-BFGS) algorithm with its variant, the Orthant-Wise Limited-memory Quasi-Newton (OWL-QN) method that applies a conjugate gradient method.

In an example, the processing unit is configured to perform additional predictive analysis of the sensed data selected from the group of (Fast) Fourier Transformation, Hilbert Huang Transformation, Peak Finding Analysis and Machine Learning (ML) or Artificial Intelligence (AI).

In an example, the processing unit does comprise an output unit configured to show the results of the method of data processing to a user.

In an example, the output unit is a monitor, printer, a graphic output device, speaker or the like.

According to an example, the method and/or system as described herein is used for predictive maintenance.

Figure 5 shows an example of a vibration spectrum of a table air fan. The sensor signal data as shown in figure 5 was acquired from a vibration sensor, attached to the fan, over 60 sec. with a sample rate of 1 kHz. 20% of the original data (12.000 of 60.000 datapoints) were randomly selected and sent over LoRa(WAN) in chunks of 228 bytes each per payload (2 bytes reserved for the checksum) and then reassembled with a processing unit and restored by means of CS. The power density spectrum as presented was received from the Fourier transformation analysis of the restored data. The power density spectrum of a time series describes the distribution of power (y-axis, arbitrary unit) into frequency components composing that signal. According to Fourier transformation analysis, any physical signal can be decomposed into a number of discrete frequencies, or a spectrum of frequencies over a continuous range. The locations, heights and potentially the broads of the individual peaks (including their harmonics) may serve as the input variables for subsequent processing (see above).

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items recited in the claims. The mere fact that certain measures are re-cited in mutually different dependent claims does not indicate that a combination of these measures cannot be used to advantage. Any reference signs in the claims should not be construed as limiting the scope.

**Claims**

1. A method (10) of data processing comprising:

    - Obtaining (20) sensor signal data from at least one sensor unit,
    - Generating (30) compressed sensing data from the sensor signal data according to a predefined random matrix,
    - Packetizing (40) the compressed sensing data to a plurality of payloads,
    - Sending (50) the plurality of payloads to a processing unit over a wireless communication system,
    - Receiving (60) the plurality of payloads by the processing unit,
    - Restoring (70) the sensor signal data by the processing unit by way of compressed sensing of the received plurality of payloads and the use of a predefined random matrix.

2. A method of data processing according to claim 1, wherein the sensor signal data are periodical sensor signal data.

3. A method of data processing according to claim 2, wherein the sensor signal data are periodical physical, chemical and/or biological sensor signal data.

4. A method of data processing according to claim 3, wherein the sensor signal data are selected form the group of audio, vibration, sound and/or image signal data.

5. A method of data processing according to one of the previous claims, wherein the following steps are performed by the at least one sensor unit:

   - Obtaining (20) a sensor signal data,
   - Generating (30) compressed sensing data from the sensor signal data according to a predefined random matrix, and
   - Packetizing (40) the compressed sensing data to a plurality of payloads,
   - Sending (50) the plurality of payloads to a processing unit over a wireless communication system.

6. A method of data processing according to one of the previous claims, wherein the predefined random matrix comprises random setpoint values defined and implemented on the at least one sensor unit and the processing unit prior to the step of obtaining (20) sensor signal data from at least one sensor unit.

7. A method of data processing according to one of the previous claims, wherein a payload comprises compressed sensing data preceded by a corresponding checksum.

8. A method of data processing according to claim 7, wherein, the plurality of payloads is sent in random checksum sequence.

9. A method of data processing according to any one of the claims 6 to 8, wherein each setpoint value of the predefined random matrix and its corresponding sensor signal data are packetized into a payload in unsorted sequence.

10. A method of data processing according to one of the previous claims, wherein the wireless communication system is a Low Power Wide Area Network.

11. A method of data processing according to claim 10, wherein the wireless communication system is selected from the group of LoRa(WAN), Sigfox, NB-IoT, and MIOTY.

12. A method of data processing according to claim 11, wherein the wireless communication system is LoRa(WAN).

13. A method of data processing according to one of the previous claims, wherein after receiving the plurality of payloads by the processing unit the plurality of payloads are assembled to a dataset before restoring the sensor signal data by the processing unit by way of compressed sensing of the received payloads and the use of a predefined random matrix.

14. A system (100) for data processing comprising

   - at least one sensor unit (110)
   - a wireless communication system (120),
   - a processing unit (130),

   wherein the at least one sensor unit is configured to obtain sensor signal data, wherein
   the at least one sensor unit is configured to generate compressed sensing data from the sensor signal data according to a predefined random matrix, wherein
   the at least one sensor unit is configured to packetize the compressed sensing data to a plurality of payloads, wherein
   the at least one sensor unit is configured to send the plurality of payloads to a processing unit over a wireless communication system, wherein
   the processing unit is configured to receive the plurality of payloads, wherein
   the processing unit is configured to restore the sensor signal by way of compressed sensing of the received payload and the use of a predefined random matrix.

15. A method according to one of the claims 1 to 13 and/or system according to claim 14, wherein the method and/or system is used for predictive maintenance.

Figure 1

a)

b)

c)

d)

e)

| | |
|---|---|
| x1 | y1 |
| x2 | y2 |
| x3 | y3 |
| x4 | y4 |
| x5 | y5 |
| x6 | y6 |
| x7 | y7 |
| x8 | y8 |
| x9 | y9 |
| x10 | y10 |
| x11 | y11 |
| x12 | y12 |
| x13 | y13 |
| x14 | y14 |
| x15 | y15 |
| x16 | y16 |
| x17 | y17 |
| x18 | y18 |
| x19 | y19 |
| x20 | y20 |
| x21 | y21 |
| ... | ... |

Checksum

y17
y21
y11
y5
y18
y9
y....
y....

max. payload
(including checksum
information)

word
word
word
word
word
word
word
word
word

f)

| |
|---|
| x17 |
| x22 |
| x11 |
| x5 |
| x18 |
| x9 |
| ... |

| | |
|---|---|
| x1 | |
| x2 | |
| x3 | |
| x4 | |
| x5 | y5 |
| x6 | |
| x7 | |
| x8 | |
| x9 | y9 |
| x10 | |
| x11 | y11 |
| x12 | |
| x13 | |
| x14 | |
| x15 | |
| x16 | |
| x17 | y17 |
| x18 | y18 |
| x19 | |
| x20 | |
| x21 | y21 |
| ... | ... |

| | |
|---|---|
| x1 | y1 |
| x2 | y2 |
| x3 | y3 |
| x4 | y4 |
| x5 | y5 |
| x6 | y6 |
| x7 | y7 |
| x8 | y8 |
| x9 | y9 |
| x10 | y10 |
| x11 | y11 |
| x12 | y12 |
| x13 | y13 |
| x14 | y14 |
| x15 | y15 |
| x16 | y16 |
| x17 | y17 |
| x18 | y18 |
| x19 | y19 |
| x20 | y20 |
| x21 | y21 |
| ... | ... |

Figure 2

Figure 3

Figure 4

Figure 5

**EUROPEAN SEARCH REPORT**

Application Number

EP 19 21 2154

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/044439 A1 (MITTAL ROHIT [US] ET AL) 11 February 2016 (2016-02-11) <br> * abstract * <br> * figure 1 * <br> * paragraph [0063] - paragraph [0085] * <br> ----- | 1-15 | INV. <br> H04L29/08 |
| X | US 2014/296678 A1 (MITTAL ROHIT [US]) 2 October 2014 (2014-10-02) <br> * abstract * <br> * paragraph [0018] - paragraph [0022] * <br> ----- | 1-15 | |
| A | US 2010/082302 A1 (GARUDADRI HARINATH [US] ET AL) 1 April 2010 (2010-04-01) <br> * abstract * <br> * figure 12 * <br> * paragraph [0134] * <br> ----- | 1-15 | |

TECHNICAL FIELDS
SEARCHED      (IPC)

H04L

The present search report has been drawn up for all claims

| Place of search | Date of completion of the search | Examiner |
|---|---|---|
| The Hague | 12 March 2020 | Suciu, Radu |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 829 138 A1**

## ANNEX TO THE EUROPEAN SEARCH REPORT
## ON EUROPEAN PATENT APPLICATION NO.

EP 19 21 2154

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2020

| Patent document cited in search report | | | Publication date | Patent family member(s) | | | Publication date |
|---|---|---|---|---|---|---|---|
| US 2016044439 | A1 | | 11-02-2016 | US | 2016044439 | A1 | 11-02-2016 |
| | | | | US | 2019053023 | A1 | 14-02-2019 |
| US 2014296678 | A1 | | 02-10-2014 | US | 2014296678 | A1 | 02-10-2014 |
| | | | | US | 2015335292 | A1 | 26-11-2015 |
| US 2010082302 | A1 | | 01-04-2010 | CN | 102165698 | A | 24-08-2011 |
| | | | | EP | 2345165 | A2 | 20-07-2011 |
| | | | | JP | 5415544 | B2 | 12-02-2014 |
| | | | | JP | 2012504022 | A | 16-02-2012 |
| | | | | KR | 20110076971 | A | 06-07-2011 |
| | | | | KR | 20120123158 | A | 07-11-2012 |
| | | | | TW | 201110569 | A | 16-03-2011 |
| | | | | US | 2010082302 | A1 | 01-04-2010 |
| | | | | US | 2019125271 | A1 | 02-05-2019 |
| | | | | WO | 2010036894 | A2 | 01-04-2010 |

EPO FORM P0459

For more details about this annex : see Official Journal of the European Patent Office, No. 12/82